# EUROPÄISCHE PATENTSCHRIFT

(11) **EP 1 916 440 B1**
(45) Veröffentlichungstag und Bekanntmachung des Hinweises auf die Patenterteilung: **30.03.2011**
(21) Anmeldenummer: 07405317.4
(22) Anmeldetag: 28.10.2007
(51) Int. Cl.: F16F 7/12, B60N 2/42

(54) **Strukturbauteil aus faserverstärktem thermoplastischem Kunststoff**
Structural part made of fibre-reinforced thermoplastics
Composant de structure en matière synthétique thermoplastique renforcée en fibres

(30) Priorität: 28.10.2006 CH 17122006
(43) Veröffentlichungstag der Anmeldung: 30.04.2008
(73) Patentinhaber: Weber Automotive AG-Holding, 8700 Küsnacht (CH)
(72) Erfinder: Jaggi, Diego, 8049 Zürich (CH); Stötzner, Norbert, 88677 Markdorf (DE)

(56) Entgegenhaltungen:
- WO-A1-99/52703
- DE-A1- 19 718 050
- DE-C1- 19 616 915
- US-A- 5 662 376

## Beschreibung

Die Erfindung betrifft ein Strukturbauteil aus faserverstärktem thermoplastischem Kunststoff gemäss Oberbegriff von Anspruch 1, welches für tragende Funktionen in verschiedenen Anwendungen einsetzbar sind.

Solche Strukturbauteile können Faserverstärkungen verschiedener Art aufweisen. Besonders günstige Eigenschaften, mit hohen Festigkeiten bei geringem Gewicht für Leichtbauanwendungen, weisen thermoplastische Strukturbauteile mit Endlosfaser-Verstärkungen, welche Endlosfaser-Stränge enthalten, auf. Aus der WO99/52703 und der WO2004/024424 beispielsweise sind solche Strukturbauteile bekannt, welche eine langfaserverstärkte thermoplastischen Matrix mit einer integrierten Endlosfaser-Verstärkung aus Endlosfaser-Strängen bzw. mit aus Endlosfaser-Strängen geformten Endlosfaser-Profilen aufweisen. Solche Strukturbauteile, welche Lasten aufnehmen können und sich vor allem auch für den Fahrzeugbau eignen, werden beispielsweise als Sitzstrukturen, Sitze, Rücksitzlehnen, Türstrukturen usw. von Fahrzeugen eingesetzt.

Bisherige faserverstärkte Strukturbauteile weisen aber auch noch wichtige Beschränkungen auf, besonders wenn Strukturbauteile in Fahrzeugen grossen Stossbelastungen ausgesetzt sind und diese insbesondere verschiedene Crashtests und Belastungstests bestehen müssen. Faserverstärkte Strukturbauteile weisen meist relativ beschränkte Bruchdehnungen auf, von z.B. 2 - 3 %, während schwerere metallische Bauteile z.T. wesentlich höhere Bruchdehnungen aufweisen können. Wenn z.B. in Crashtests Stosslasten aufgenommen werden müssen, welche über der Elastizitätsgrenze dieser faserverstärkten Strukturbauteile liegen bzw. über deren Bruchlasten, dann entstehen grosse irreversible Beschädigungen und vor allem besteht die Gefahr, dass die Strukturbauteile brechen und damit ihre Funktionsfähigkeit vollständig verlieren.

Zum Abbau von Stosskräften offenbart die DE 197 18 050 A1 ein kleines leichtes, aus Kunststoff hergestelltes Kraftbegrenzungsteil, welches sich auch für Bauteile aus einem Faserverbundwerkstoff eigne. Dabei muss jedoch die Krafteinleitung über Kraftübertragungselemente erfolgen, d.h. eine Kraftübertragung von einem Verbundwerkstoff-Bauteil auf einen metallischen Beschlag (17, 32) und anschliessend erst konzentriert vom metallischen Beschlag auf das Kraftbegrenzungsteil (3, 11, 12, 13, 19), in welchem durch plastisches Durchdrücken Energie absorbiert wird. Da der notwendige metallische Beschlag relativ gross und schwer ist, kann dies für reine Leichtbau-Verbundwerkstoff-Bauteile keine gewichtssparende Lösung darstellen. Überdies können diese Kunststoff-Kraftbegrenzungsteile nur Kräfte in einer Richtung aufnehmen. Die Lehre der DE 197 18 050 A1 kann deshalb die nachstehende Aufgabe nicht lösen.

Aufgabe der vorliegenden Erfindung ist es daher, mit einfachen Mitteln leichte faserverstärkte Strukturbauteile zu schaffen, welche Stosslasten wesentlich besser aufnehmen können mit geringeren irreversiblen Deformationen und vor allem ohne zu brechen, so dass ihre Funktionsfähigkeit besser erhalten bleibt und alle Anforderungen von Belastungstests und Crashtests erfüllt werden können. Dabei müssen an den Lastaufnahmestellen des Strukturbauteils alle auftretenden Kräfte mit unterschiedlichen Richtungen aufgenommen werden.

Diese Aufgabe wird erfindungsgemäss gelöst durch ein Strukturbauteil nach Anspruch1. Dabei werden die leichten faserverstärkten Strukturbauteile mit einem integrierten Endlosfaser-Strang und mit einem kompakten, relativ kleinen und leichten metallischen Deformationselement kombiniert, welches an einer Lastaufnahmestelle in das Strukturbauteil integriert wird und wobei der Endlosfaser-Strang bis an die Krafteinleitungsstelle zum Deformationselement reicht. Damit werden Überlasten, d.h. Kräfte, welche deutlich über der Elastizitätsgrenze des Strukturbauteils liegen, mindestens teilweise aufgenommen und durch plastische Deformation des Deformationselements Stossenergie und Kraftspitzen soweit abgebaut, dass das faserverstärkte Strukturbauteil keine oder wesentlich geringere irreversible plastische Deformationen erleidet und dass es vor allem nicht auseinander bricht, da die überschüssige Energie durch das Deformationselement aufgefangen und abgebaut wird und so eine erforderliche Funktionsfähigkeit auch nach einer Crashbelastung erhalten bleibt.

Die abhängigen Patentansprüche betreffen vorteilhafte Weiterbildungen der Erfindung bezüglich optimaler Ausbildung, Gestaltung und Dimensionierung der Deformationselemente, abgestimmt auf die Strukturbauteile. Dies ergibt leichte, einfach herstellbare Strukturbauteile, welche hohe Lastanforderungen und auch vielfältige Crashtests mit sehr unterschiedlichen Bedingungen erfüllen können und welche sich besonders für Transportmittel und als Komponenten mit tragenden Funktionen im Fahrzeugbau eignen.

Im Folgenden wird die Erfindung anhand von Ausführungsbeispielen und Figuren weiter erläutert. Dabei zeigen:
- Fig. 1: ein erfindungsgemässes Strukturbauteil mit Deformationselement,
- Fig. 2a, b: ein Deformationselement und einen Deformationsweg in zwei Ansichten
- Fig. 3a, b: Beispiele von verschiedenen Kraft-Weg-Verläufen von Deformationselementen,
- Fig. 4a: einen Kraftverlauf in Funktion des Deformationswegs eines Deformationselements,
- Fig. 4b: einen Kraftverlauf in Funktion des Deformationswegs eines Strukturbauteils,
- Fig. 4c: einen Kraftverlauf in Funktion der Deformationswege eines Strukturbauteils mit Deformationselement,
- Fig. 5: Kraftverläufe in Funktion der Zeit von einem Strukturbauteil mit und ohne Deformationselement,
- Fig. 6: ein Berechnungsbeispiel von Kraftverläufen in Funktion der Zeit von einem Strukturbauteil mit und ohne Deformationselement,
- Fig. 7a: ein geschlitztes Blech als Deformationselement,
- Fig. 7b: ein wellenförmiges Deformationselement,
- Fig. 8a, b: ein Deformationselement mit einer formschlüssigen Verbindung an der Krafteinleitungsstelle,
- Fig. 9a, b: Beispiele eines Deformationswegs mit translatorischen und rotatorischen Deformationen,
- Fig. 10a, b, c: verschiedene Ansichten einer 2/3 Rücksitzlehne mit Deformationselementen und einwirkenden Stosslasten,
- Fig. 11: eine Einzelsitzstruktur mit Sitzschale und Sitzlehne und Deformationselementen,
- Fig. 12: eine Türstruktur mit Deformationselementen.

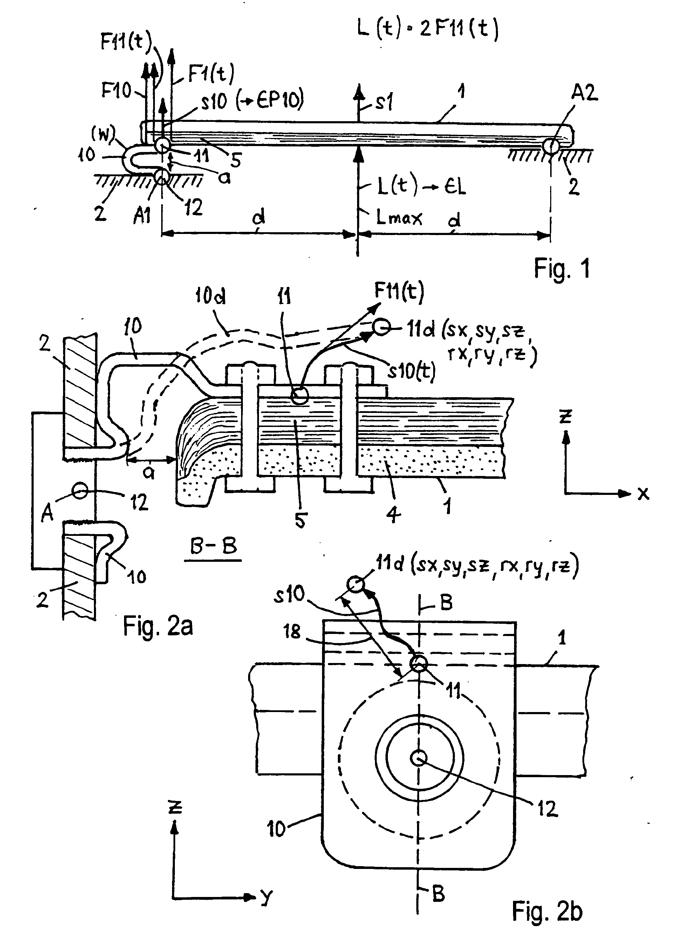

Fig. 1 zeigt schematisch ein erfindungsgemässes Strukturbauteil 1 aus faserverstärktem thermoplastischem Kunststoff mit einem relativ kleinen, kompakten metallischen Deformationselement 10. Das Strukturbauteil mit mindestens einem integrierten Endlosfaser-Strang 5 ist an Lastaufnahmestellen A1, A2 mit einer Tragstruktur 2, z.B. in einem Fahrzeug, verbunden. Das Deformationselement 10 ist einerseits an einer Krafteinleitungsstelle 11 mit dem Strukturbauteil 1 und andererseits an einer Verbindungsstelle 12 mit der Tragstruktur 2 verbunden - hier an der Lastaufnahmestelle A1. Ein integrierter Endlosfaser-Strang 5 erstreckt sich bis an die Krafteinleitungsstelle 11, so dass auf das Strukturbauteil wirkende Kräfte konzentriert an diese Krafteinleitungsstellen 11 geleitet werden und so eine direkte Kraftübertragung vom Endlosfaser-Strang 5 auf das Deformationselement 10 erfolgen kann (siehe auch Fig. 2). Das Deformationselement 10 wird vorzugsweise an einer Lastaufnahmestelle A angeordnet, wo bei Einwirkung einer Stosslast L(t) auf das Strukturbauteil besonders starke Lasten bzw. grosse Kraftspitzen F11(t) auftreten. Das Deformationselement besteht aus Metall, z.B. aus Stahl, es ist relativ klein und kompakt ausgebildet, so dass es wenig Bauraum erfordert und wenig wiegt und es ist so dimensioniert, geformt und ausgelegt, dass es eine plastische irreversible Deformation über einen Deformationsweg s10 erfährt, wenn durch eine Stosslast L(t), welche auf das Strukturbauteil einwirkt, an der Krafteinleitungsstelle 11 eine Kraft F11(t) erzeugt wird, welche grösser ist als ein Schwellenwert W.

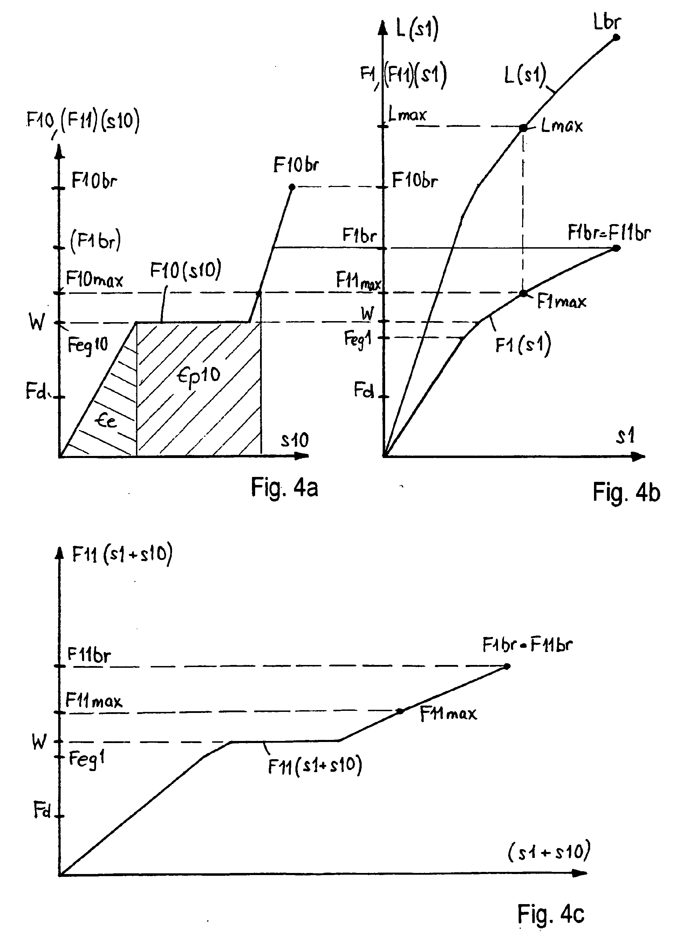

Dieser Schwellenwert W ist so gewählt, bzw. das Deformationselement 10 so dimensioniert und ausgelegt, dass eine definierte maximale Stosslast Lmax ohne Brechen des Strukturbauteils aufgefangen wird und dabei die Stossenergie EL teilweise durch plastische Deformationsenergie Ep10 des Deformationselements 10 abgebaut wird, so dass nach einer aufgetretenen maximalen Stosslast Lmax, z.B. gemäss Crashtest-Anforderungen, das Strukturbauteil 1 noch eine Restkraft aufnehmen kann und die erforderliche Funktionsfähigkeit erhalten bleibt. Die Beziehungen zwischen dem Schwellenwert W, den Kräften F10, F1, F11 und dem Deformationsweg s10 sind zu den Fig. 4a - c weiter erläutert.

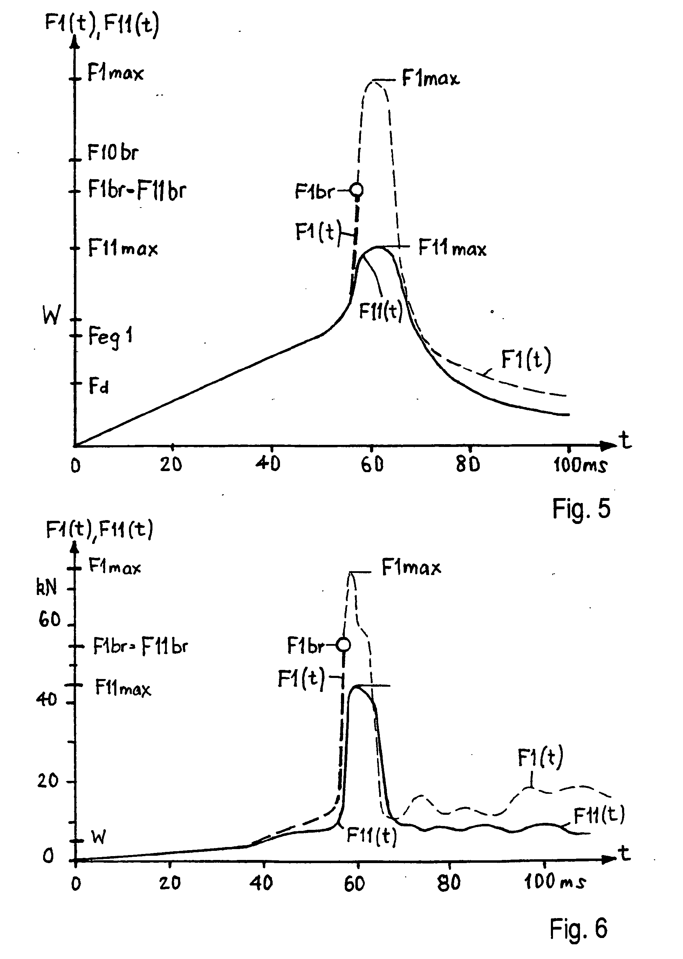

Eine starke Reduktion der maximalen Kraft F11max (Fig. 5) kann erreicht werden mit einem Deformationselement, welches mit seinem Schwellenwert W so ausgelegt ist, dass bei einer einwirkenden definierten maximalen Stosslast Lmax die plastische Deformationsenergie Ep10 des Deformationselements mindestens 10% der Stossenergie EL beträgt. Eine deutliche Reduktion der maximalen Kraftspitzen F11max ist aber schon möglich, wenn die Deformationsenergie Ep10 nur wenige Prozent der Stossenergie EL beträgt.

Die Fig. 2a, b zeigen ein Deformationselement 10 in zwei Seitenansichten: Fig. 2a im Schnitt von vorne und Fig. 2b von der Seite, hier ohne die Tragstruktur 2. Geeignete Deformationselemente können aus einem Metall mit hoher Bruchdehnung (z.B. aus geeignetem Stahl) bestehen, welche mindestens der 2- bis 3-fachen Bruchdehnung des Strukturbauteils 1 entspricht und welche z.B. mindestens 5% beträgt.

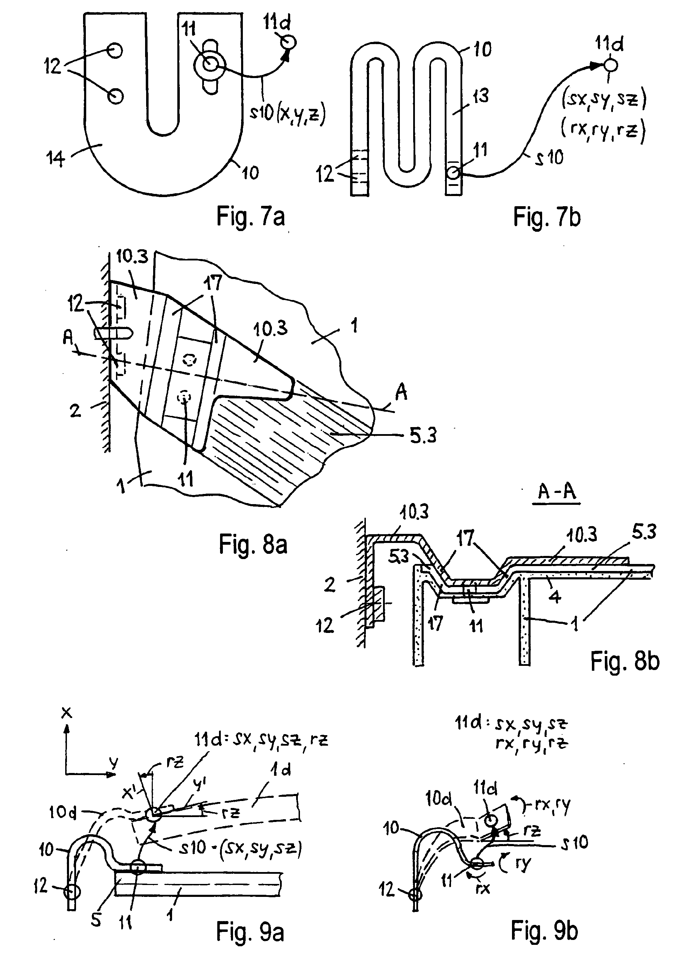

Dieses Deformationselement von Fig. 2 besteht aus einem geformten gebogenen Stahlblech, welches an der Krafteinleitungsstelle 11, z.B. durch Verschraubung, fest mit dem Strukturbauteil 1 und dem integrierten Endlosfaser-Strang 5 verbunden ist und welches an der Verbindungsstelle 12, welche eine Lastaufnahmestelle A darstellt, mit der Tragstruktur 2 fest verbunden ist. Dieses Deformationselement kann somit als ein separates, auswechselbares Element ausgebildet sein. Durch die Belastung mit einer Stosslast L(t) und die daraus resultierende Kraft F11(t) an der Stelle 11 wird das Deformationselement über einen Weg s10(t) in die deformierte Lage 11d deformiert. Dabei kann der Deformationsweg s10 des Deformationselements sowohl bezüglich Translation (sx, sy, sz) als auch bezüglich Rotation (rx, ry, rz) räumlich erfolgen. Dies ist sehr wichtig, da bei realen Stosslasten, z.B. bei Crashtests, die resultierenden an der Krafteinleitungsstelle 11 auftretenden Kräfte nicht nur in einer konstanten Richtung verlaufen, sondern über den Deformationsweg in sich ändernden Richtungen und dabei auch sich ändernde Biegemomente auftreten.
Das Deformationselement 10 ist deshalb vorzugsweise so geformt und ausgelegt, dass es mindestens eine translatorische und eine rotatorische plastische Deformation aufnehmen kann (siehe Fig. 9a, b).

Das Deformationselement wird in seiner Formgebung und Dimensionierung so ausgelegt, dass entsprechend den auftretenden Kräften F11(t) eine optimale Deformation bzw. ein optimaler Deformationsweg s10(x, y, z) erreicht wird und dass dabei gegebene Randbedingungen bezüglich geometrischer Begrenzungen des Deformationswegs, bezüglich Kraftverlauf F(s10) und erlaubter maximaler Lasten F11max am Strukturbauteil eingehalten werden, wie im Folgenden weiter erläutert wird.
Dazu muss zwischen dem Strukturbauteil 1 und der Tragstruktur 2 ein hinreichend freier Raum mit einem Abstand a für die Deformationsbewegungen des Deformationselements 10 vorgesehen sein.
Die Deformationselemente 10 können an der Krafteinleitungsstelle 11 auf verschiedene Arten mit dem Strukturbauteil 1 direkt oder indirekt verbunden sein und auch unlösbar fest integriert werden.

Die resultierende irreversible plastische Deformation 18 nach einer starken Belastung des Strukturbauteils 1 kann z.B. mit einer Lehre gemessen werden. Das Deformationselement kann somit als Indikator ausgebildet sein, welcher diese plastische Deformation 18, bzw. den Deformationsweg s10 anzeigt. Nach einer starken Belastung kann das Deformationselement somit anzeigen, wie stark diese Belastung auch auf das Strukturbauteil 1 eingewirkt hat und daraus kann abgeleitet werden, wie starke irreversible Schädigungen des Strukturbauteils (wie Faserbrüche und Mikrorisse im Inneren des Strukturbauteils) resultierten. Entsprechend kann dann das Deformationselement 10 oder bei stärkerer Schädigung auch das ganze Strukturbauteil 1 ersetzt werden.

Das Beispiel von Fig. 2 zeigt ein Strukturbauteil mit einem Endlosfaser-Strang 5, welcher an der Krafteinleitungsstelle 11 mit dem Deformationselement 10 fest verbunden ist. Die Endlosfaser-Verstärkung 5 ist hier integriert in eine formgebende langfaserverstärkte Masse 4 (wie auch in den Beispielen der Fig. 8, 10, 11, 12).

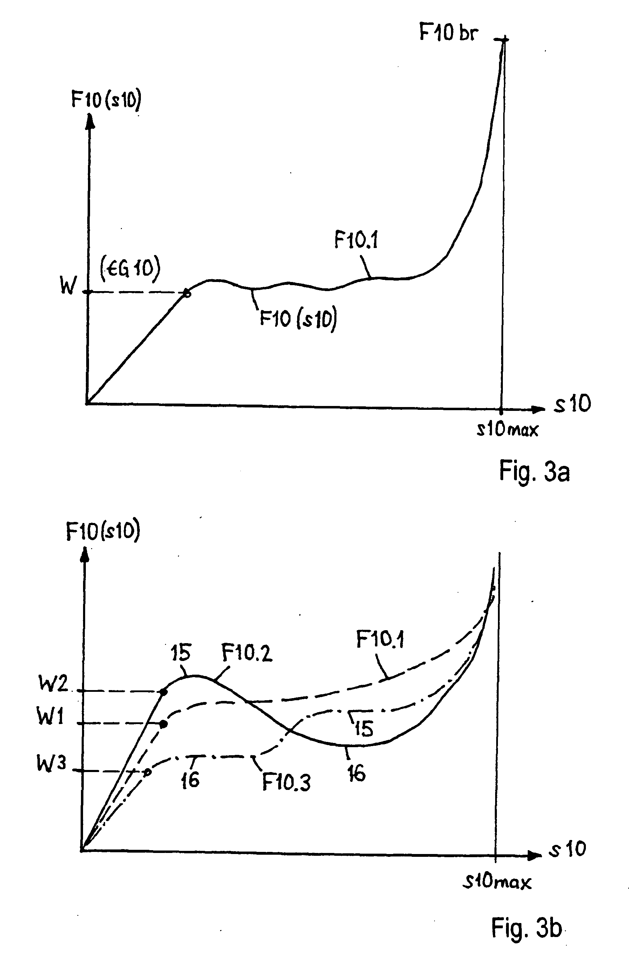

Die Fig. 3a, b zeigen Beispiele von verschiedenen Kraftverläufen F10(s10) von Deformationselementen 10 in Funktion des Deformationswegs s10. Vorzugsweise wird der Deformationsweg begrenzt mit einem Wert s10max, beispielsweise durch einen Anschlag oder indem die Kraft F10(s10) hier rasch ansteigt, wobei jedoch die Bruchkraft F10br des Deformationselements höher ausgelegt ist als die Bruchkraft F1br des Strukturbauteils 1 an der Krafteinleitungsstelle 11 gemessen (Fig 4). F10(s10) steigt unter elastischer Deformation Ee bis zu einem Schwellenwert W (entsprechend einem Elastizitätsgrenzwert EG10), worauf anschliessend eine plastische Deformation Ep erfolgt und der Kraft-Weg-Verlauf im mittleren Bereich im wesentlichen konstant oder leicht ansteigend verläuft gemäss Kurve F10.1.
Je nach Anwendung und Anforderungen an das Deformationselement kann der Kraft-Weg-Verlauf F10(s10) auch Bereiche mit höheren Werten 15 und mit tieferen Werten 16 aufweisen: Beispielsweise gemäss Kurve F10.2 mit einem höheren Schwellenwert W2 zuerst höhere Werte (mit grösserem Deformationswiderstand) und anschliessend tiefere Werte (mit kleinerem Deformationswiderstand) aufweisen.
F10(s10) kann auch gemäss Kurve F10.3 mit einem tieferen Schwellenwert W3 anschliessend stufenweise ansteigen (16, 15).

Die Fig. 4a, b, c zeigen an der Krafteinleitungsstelle 11 schematisch Kraftverläufe F(s) in Funktion der Deformationswege s eines Deformationselements 10, eines Strukturbauteils 1 ohne Deformationselement und eines Strukturbauteils 1 mit dem Deformationselement 10, welche der Darstellung von Fig. 1 entsprechen.

Fig. 4a zeigt den Kraftverlauf F10(s10) eines Deformationselements 10 in Funktion des Deformationswegs s10 an der Krafteinleitungsstelle 11. F10 steigt bis zu einem Schwellenwert W, wobei die elastische Deformationsenergie Ee10 des Deformationselements 10 vom Deformationselement 10 aufgenommen wird. Anschliessend erfolgt eine plastische Deformation mit der plastischen Deformationsenergie Ep10 bis zu einem Wert F10max, der einer maximalen Last Lmax entspricht (Fig. 4b), welche auf das zugeordnete Strukturbauteil 1 als Stosslast L(t) ausgeübt wird (siehe Fig. 1).

Fig. 4b zeigt den Kraftverlauf F1(s1) an der Stelle 11 in Funktion des Deformationswegs s1, in der Mitte eines Strukturbauteils 1 gemessen (gemäss Fig. 1), hier ohne ein zugeordnetes Deformationselement 10. Die Krafteinleitungsstelle 11 und die Verbindungsstelle 12 fallen dann zusammen (sind identisch = A1). Die Kraft F1(s1) steigt im elastischen Bereich linear an bis zu einem Wert Feg1, welcher der Elastizitätsgrenze EG1 des Strukturbauteils 1 entspricht. Dann setzen langsam auch plastische Deformationen ein und die Kurve verläuft flacher bis zu einem Wert F1max, welcher der maximalen Last Lmax entspricht.

Wesentlich ist, dass der Schwellenwert W des Deformationselements 10 kleiner ist als die Bruchkraft F1br des Strukturbauteils allein und auch als die Bruchkraft F11br des Strukturbauteils mit Deformationselement 10. Dabei ist im wesentlichen F1br = F11br und auch F1max = F11max (gleiche maximale Kräfte).
Vorzugsweise ist die Bruchkraft F10br des Deformationselements 10 mindestens so gross wie die Bruchkraft F1br des Strukturbauteils. Damit nicht das Deformationselement bricht.
Vorzugsweise kann der Schwellenwert W höchstens 60% - 70% der Bruchkraft F1br des Strukturbauteils betragen, so dass das Deformationselement seine Funktion optimal ausüben kann.
Der Schwellenwert W kann vorzugsweise auch 100 % - 150% der Kraft Feg1 betragen, welche dem Elastizitätsgrenzwert EG1 des Strukturbauteils 1 entspricht. In Fig. 4b ist zusätzlich auch der Verlauf der Stosslast L(s1) gezeigt, welche im Beispiel von Fig. 1 in der Mitte des Strukturbauteils 1 angreift (mit gleichem Abstand d zu A1 und zu A2).

Die aus L(s1) resultierende Kraft F1(s1) an der Stelle 11 ist dann halb so gross wie die Last L(s1) in der Mitte des Strukturbauteils 1 gemessen.

Der Schwellenwert W sollte vorzugsweise deutlich grösser sein als eine im normalen Betrieb eines Strukturbauteils auftretende maximale Betriebskraft Fd an der Krafteinleitungsstelle 11. Somit sollten im Normalbetrieb noch keine plastischen Deformationen, weder am Deformationselement 10 noch am Strukturbauteil 1 auftreten.

In Fig. 4c sind die Darstellungen von Fig. 4a und 4b bzw. die Kraftverläufe des Deformationselements F10(s10) und des Strukturbauteils F1(s1) zusammengesetzt dargestellt. Fig. 4c zeigt an der Stelle 11 den Kraftverlauf F11 (s1 + s10) des Strukturbauteils 1 mit Deformationselement 10 in Funktion der Deformationswege: s1 + s10 (wobei s10 an der Stelle 11 und s1 in der Mitte des Strukturbauteils 1 gemessen ist).

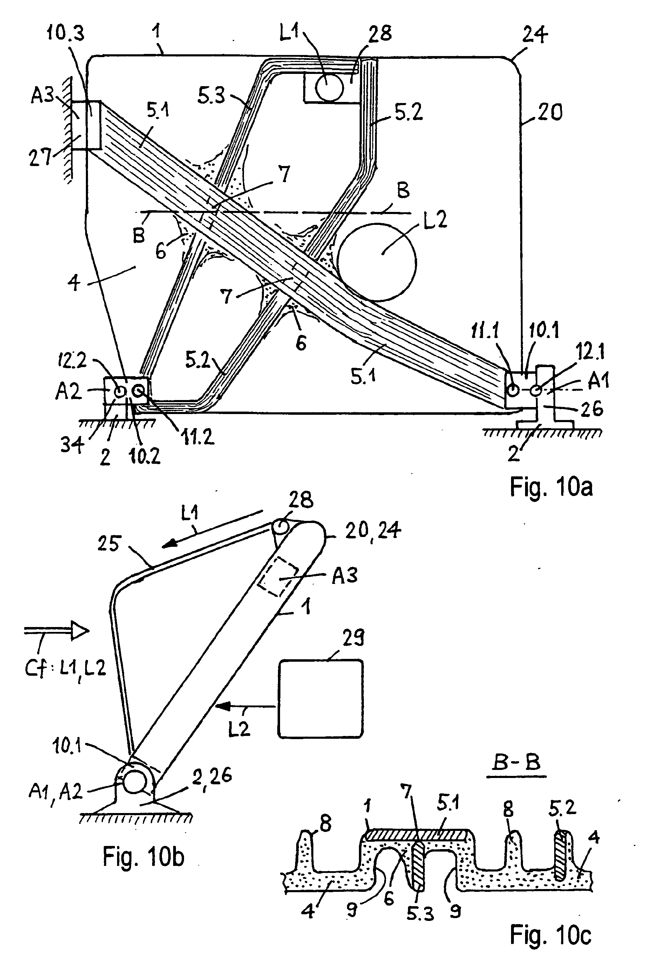

Fig. 5 zeigt an der Stelle 11 schematisch Kraftverläufe F1(t) und F11(t) eines Strukturbauteils 1 ohne und mit Deformationselement 10 in Funktion der Zeit t. Diese Kraftverläufe entsprechen z.B. einem Frontcrash-Test an einer Rücksitzlehne gemäss Fig. 10 mit verschiedenen definierten Stosslasten L(t), welche einer maximalen Gesamtbelastung mit den maximalen Kraftwerten F1max und F11max des Strukturbauteils ohne und mit Deformationselement 10 entsprechen. Die Bruchkräfte F1br des Strukturbauteils ohne und F11br mit Deformationselement sind im wesentlichen gleich gross. Die Kraft F1(t) des Strukturbauteils ohne Deformationselement zeigt einen flachen Anstieg bis zu einem Wert Feg1 entsprechend dem Elastizitätsgrenzwert EG1 des Strukturbauteils. Anschliessend steigt die Kurve F1(t) steil an bis zur Bruchkraft F1br und theoretisch weiter bis zu einem hohen Wert F1max, um danach wieder abzufallen. Beim Bruchkraftwert F1br bricht die Rücksitzlehne ohne Deformationselement jedoch auseinander, die Crashlast-Anforderungen können somit ohne Deformationselement nicht erfüllt werden.

Gemäss Kraftverlauf F11(t) des Strukturbauteils mit Deformationselement 10 werden die Crash-Anforderungen jedoch erfüllt: Über dem Schwellenwert W wird der Kraftanstieg stark reduziert und der Maximalwert F11max liegt wesentlich unter der Bruchkraft F11br. Die Rücksitzlehne bricht somit nicht und obwohl bei Kräften über dem Wert Feg1 innere Schädigungen und irreversible Deformationen aufzutreten beginnen, so bleibt doch die geforderte Funktionsfähigkeit erhalten.
Ohne Deformationselement 10 müsste dasselbe Strukturbauteil 1, d.h. diese Rücksitzlehne, wesentlich stärker, schwerer und damit auch teurer dimensioniert werden, um nicht zu brechen und den Crashtest-Anforderungen genügen zu können. Vorzugsweise wird der Schwellenwert W so gewählt, dass bei einer definierten maximalen Stosslast Lmax die maximal auftretende Kraft F11max höchstens 80% - für höhere Anforderungen besser noch höchstens 60% - der maximal auftretenden Kraft F1max an der Krafteinleitungsstelle 11 ohne Deformationselement 10 beträgt.

Fig. 6 zeigt ähnlich dem Beispiel von Fig. 5 ein Berechnungsbeispiel von Kraftverläufen F1(t) und F11(t) eines Strukturbauteils ohne und mit Deformationselement in Funktion der Zeit. Hier wird schon mit einem kleinen metallischen Deformationselement ein relativ grosser Effekt, d.h. eine starke Reduktion der maximalen Kraft F11max im Vergleich zu F1max erreicht.
Die Kurvenverläufe sind ähnlich wie in Fig. 5. Ab einem Schwellenwert W steigt F1(t) stärker und dann wieder sehr steil an bis zur maximalen Kraft F1max von beispielsweise hier gut 70 kN, dann fällt F1(t) rasch ab, wobei jedoch anschliessend (ca. 100 ms nach Stossbeginn) ein relativ deutliches Nachschwingen mit ca. 20 kN erfolgen kann. Der Kraftverlauf mit Deformationselement F11(t) zeigt wiederum eine starke Reduktion der maximalen Kraft F11max auf ca. 45 kN. Dies liegt deutlich unter den Bruchkräften F1br und F11br von ca. 55 kN.
Das Strukturbauteil mit Deformationselement bricht also nicht, die Crashtest-Anforderungen und die restliche Funktionsfähigkeit der Rücksitzlehne werden erfüllt. Ohne Deformationselement 10 jedoch liegt die maximale Kraft F1max wesentlich über der Bruchkraft F1br - das Strukturbauteil bricht also auseinander. (Die theoretische Kurve F1(t) nach F1br ist berechnet unter der Annahme, die Materialfestigkeit des Strukturbauteils liege über dem Wert F1max.) Die Kurve F11(t) fällt nach dem Stoss bei 80 - 120 ms stärker ab und liegt mit weniger als 10 kN wesentlich tiefer als bei F1(t). Es tritt auch kein starkes Nachschwingen auf.
Dieses Beispiel entspricht einem simulierten gerechneten Front-Crashtest für eine Rücksitzlehne gemäss Fig. 10, z.B. nach USNCAP mit einem 95% male dummy und 2 x 18 kg Gepäcklast.

Ein grosser Vorteil und auch überraschender Effekt der Erfindung liegt darin, dass mit relativ wenig Aufwand, mit minimalem Platzbedarf, minimalen Kosten und Gewicht des metallischen Deformationselements 10 und durch die konzentrierte Kraftübertragung mit dem Endlosfaser-Strang 5 auf die Krafteinleitungsstelle 11 eine grosse Wirkung, vor allem eine starke Reduktion der Spitzenbelastung F11max erreicht wird. Damit kann das ganze Strukturbauteil 1 wesentlich leichter dimensioniert werden und mit dem erfindungsgemässen Strukturbauteil inklusive Deformationselement können sowohl Gewicht als auch Kosten deutlich reduziert werden.

Die Fig. 7a, b zeigen Beispiele von metallischen Deformationselementen 10 mit einem möglichen Deformationsweg s10(x, y, z), wobei die Krafteinleitungsstelle 11 relativ zur festen Verbindungsstelle 12 in die Lage 11d räumlich verschoben wird.
Fig. 7a zeigt ein geschlitztes Blech 14 als Deformationselement und Fig. 7b zeigt ein wellenförmig gebogenes Blech 13, welches einen besonders grossen Deformationsweg s10 ermöglicht. Die gewünschten Kraftverläufe F10(s10), wie z.B. zu Fig. 3 erläutert ist, werden durch die Formgebung und Dimensionierung der Deformationselemente 10 erzeugt.

Die Fig. 8a, b zeigen eine weitere vorteilhafte Ausführung der Erfindung mit einer formschlüssigen Verbindung 17 zwischen einem Endlosfaser-Strang des Strukturbauteils und dem Deformationselement an der Krafteinleitungsstelle 11. Dazu weisen hier der Endlosfaser-Strang 5.3 und das Deformationselement 10.3 an der Krafteinleitungsstelle 11 beide eine passende formschlüssige Ausformung 17 auf - hier in Form einer Vertiefung, welche einen Formschluss bezüglich der Hauptbelastungsrichtungen ergibt. Das Deformationselement 10.3 ist auch formlich dem hier schräg verlaufenden Endlosfaser-Strang 5.3 angepasst zwecks optimaler Krafteinleitung. Dieses Deformationselement 10.3 könnte z.B. an einem Sitzschloss 27 im Beispiel von Fig. 10a eingesetzt sein. Fig. 8a zeigt das Deformationselement von oben und Fig. 8b in einem Schnitt A - A.

Die Fig. 9a, b illustrieren weiter die verschiedenen möglichen Deformationskräfte und -momente, welche an der Krafteinleitungsstelle 11 auftreten und welche über dem Deformationsweg s10 auf das Deformationselement 10 einwirken und es entsprechend dreidimensional deformieren.

Fig. 9a zeigt als vereinfachtes Beispiel eine Einwirkung einer Stosslast auf ein Strukturbauteil 1 in Hauptrichtung x, welche an der Krafteinleitungsstelle 11 eine translatorische Verschiebung der Krafteinleitungsstelle 11 in die Lage 11d erzeugt. Da das Strukturbauteil selber auch deformiert (durchgebogen) und verschoben wird, wird die Krafteinleitungsstelle 11 auch verdreht, hier mit einer Rotation rz um die z-Achse. Deshalb muss das Deformationselement in den meisten Fällen so ausgelegt sein, dass es eine translatorische und eine rotatorische plastische Deformation aufnehmen kann.

Fig. 9b zeigt eine Beispiel, welches zusätzlich zur Rotation rz noch weitere rotatorische Deformationen rx, ry um die Raumachsen x, y aufweist. Dies ist mit dem deformierten Deformationselement 10d und der Lage und Orientierung der Krafteinleitungsstelle 11d mit sx, sy, sz und rx, ry, rz dargestellt. Es ist deshalb sehr wichtig, dass das metallische Deformationselement den jeweiligen Anforderungen entsprechend Translationen und Rotationen dreidimensional aufnehmen kann.

Die Fig. 10a, b, c zeigen eine 2/3 Rücksitzlehne 24 eines Fahrzeugs als Beispiel eines erfindungsgemässen Strukturbauteils mit Deformationselementen, welches besonders hohen Anforderungen genügen muss, z.B. gemäss Crashtests nach amerikanischen Vorschriften USNCAP oder nach europäischen ECE Vorschriften. Um hohe Festigkeiten bei geringem Gewicht zu erreichen, müssen solche Strukturbauteile Endlosfaser-Verstärkungen 5 enthalten. Mit Vorteil können sie mindestens zwei Endlosfaser-Stränge 5.1, 5.2 enthalten, welche mit einem langfaserverstärktem Verbindungsbereich 6 kraftübertragend verbunden sind. Die Endlosfaser-Stränge können als flache Endlosfaser-Profile ausgebildet sein mit einem horizontalen Endlosfaser-Profil 5.1 und einem dazu vertikal orientierten Endlosfaser-Profil 5.2, welche an einer räumlichen Kreuzungsstelle 7 miteinander verbunden sind. Dies ergibt Strukturbauteile, welche Kräfte und Momente tragen können, die in verschiedene Richtungen führen und an verschiedenen Stellen des Strukturbauteils auftreten, wie es beispielsweise an der Rücksitzlehne von Fig. 10 gezeigt ist. Dabei kann auch mehr als ein Deformationselement 10.1, 10.2, 10.3 eingesetzt werden. Bei der Rücksitzlehne 24 kann eine Deformationselement 10.1, 10.2, 10.3 an einer mittleren Achshalterung 26, an einer äusseren Achshalterung 34 oder an einem Sitzschloss 27 angeordnet sein oder es können Deformationselemente an zwei oder an allen drei Lastaufnahmestellen A1, A2, A3 angeordnet sein - je nach Anforderungen und Randbedingungen.

Fig. 10a zeigt die 2/3 Rücksitzlehne im Grundriss, Fig. 10b von der Seite und Fig. 10c zeigt einen Querschnitt in der Ebene B-B von Fig. 10a. Die Rücksitzlehne enthält drei Endlosfaser-Stränge bzw. -Profile 5.1, 5.2, 5.3, welche in eine formgebende langfaserverstärkte Thermoplastmasse 4 integriert sind, so dass die auftretenden Lasten L und Kräfte an den Lastaufnahmestellen A optimal aufgenommen, weitergeleitet und über die Endlosfaser-Stränge an den Krafteinleitungsstellen 11 konzentriert auf die Deformationselemente übertragen werden können. Dazu erstreckt sich ein flach angeordnetes Endlosfaser-Profil 5.1 von einer mittleren Achshalterung 26, welche eine Lastaufnahmestelle A1 bildet, zu einem Sitzschloss 27 als Lastaufnahmestelle A3. Zwei vertikal orientierte Endlosfaser-Profile 5.2, 5.3 erstrecken sich von der Lastaufnahmestelle A2 (seitliche Achshalterung) im Abstand zueinander zu einer Gurtanbindung 28.

Diese Endlosfaser-Profile sind an einer räumlichen Kreuzungsstelle 7 durch einen Verbindungsbereich 6 aus langfaserverstärktem Thermoplast 4 miteinander verbunden. Damit wird eine steife Struktur geschaffen. Die Seitenansicht von Fig. 10b illustriert die bei einem Frontcrash Cf auftretenden Stosslasten L1 und L2. Die Gurtlast L1 eines Passagiers wirkt auf einen Sicherheitsgurt 25 und greift am Gurtschloss 28 an. Ein Gepäckstück 29 erzeugt beim Aufprall von hinten auf die Rücksitzlehne 24 eine Gepäcklast L2 (z.B. nach USNCAP Test mit 2 x18 kg Gepäcklast, siehe Fig. 6).

Im Schnitt von Fig. 10c ist die steife, räumliche Struktur ersichtlich mit einem flachen Endlosfaser-Profil 5.1 und den kreuzenden vertikalen Endlosfaser-Profilen 5.2, 5.3. Zusätzlich weist die Rücksitzlehne versteifende Rippen 8 und Sicken 9 auf.

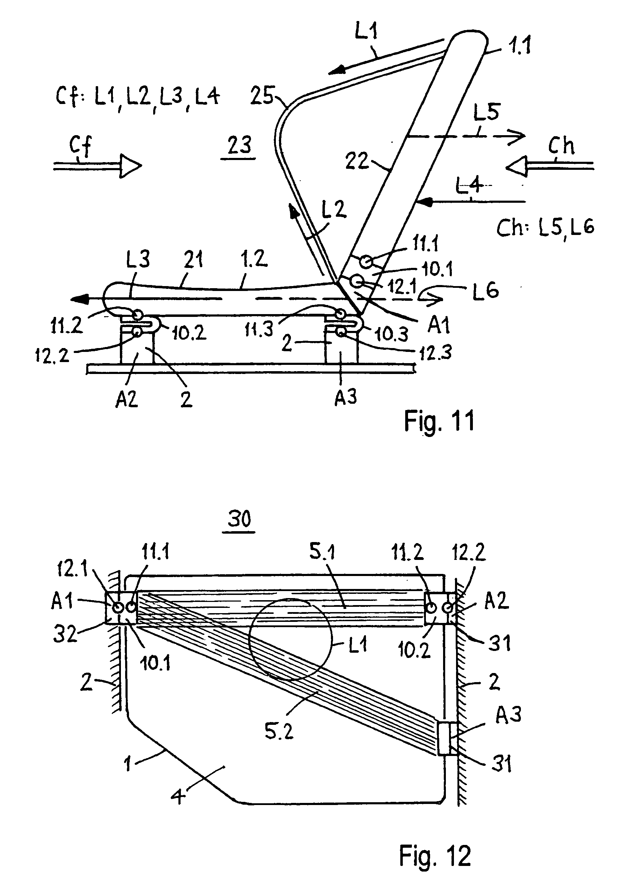

Fig. 11 zeigt weitere Beispiele von Sitzstrukturen 20 als Strukturbauteile, welche als Sitzbank, Sitzschale 21, Sitzlehne 22 oder als Einzelsitzstruktur 23 ausgebildet sein können. Fig. 11 zeigt eine Einzelsitzstruktur mit einem Strukturbauteil 1.1 als Sitzlehne 22 und einem Strukturbauteil 1.2 als Sitzschale 21. Die Sitzschale 21 weist zwei Deformationselemente 10.2, 10.3 auf, welche die Sitzschale mit der Tragstruktur 2 an den Stellen 11 und 12 verbinden, hier an den Lastaufnahmestelle A2, A3.
Hier ist ein Deformationselement 10.1 zwischen den beiden Strukturbauteilen 1.1 und 1.2 an einem Sitzschloss und Gelenk angeordnet, welches die Lastaufnahmestelle A1 bildet. Die Sitzschale 21 bildet hier die Tragstruktur für die Sitzlehne 22.
Bei einem Frontcrash Cf treten die Lasten L1, L2 = Gurtlasten, L3 = Sitzlast und L4 = Gepäcklast auf. Bei einem Heckcrash Ch treten die Lasten L5 (eines Passagiers) und L6 (Sitzlast) auf.

Vorzugsweise kann das metallische Deformationselement auch zur Aufnahme von mehr als einer Stosslast L(t) ausgelegt sein, z.B. zur Aufnahme von Kräften in verschiedene Richtungen, von verschiedenen Lasteinleitungsstellen L und in unterschiedlicher zeitlicher Abfolge - z.B. auch bei einem Frontcrash und einem anschliessenden Heckcrash.

Gemäss dem Beispiel von Fig. 12 kann ein erfindungsgemässes Strukturbauteil auch als Türstruktur 30 ausgebildet sein, wobei ein Deformationselement 10.1 an einem Türschloss 32 und / oder an einem Scharnier 31 als Deformationselement 10.2 angeordnet sein können. Die Türstruktur 30 zeigt ebenfalls Endlosfaser-Verstärkungen mit zwei Endlosfaser-Profilen 5.1 und 5.2, welche die beiden Türscharniere 31 je mit dem Türschloss 32 verbinden. Bei einer Stosslast L1, welche einem Seitencrashtest entsprechen kann, bilden das Türschloss und die beiden Türscharniere die Lastaufnahmestellen A1, A2, A3.
Wie in diesen Beispielen von Fig. 10 und 12 gezeigt ist, können sich die Endlosfaser-Stränge vorzugsweise von einer Krafteinleitungsstelle 11 eines Deformationselements bis zu Lasteinleitungsstellen L und / oder bis an eine entfernte andere Lastaufnahmestelle A erstrecken:
In Fig. 10a, z.B. der Endlosfaser-Strang 5.1, von der Krafteinleitungsstelle 11.1 bei A1 über L2 bis zur Lastaufnahmestelle A3, und die Endlosfaser-Stränge 5.2, 5.3 von 11.2 (bei A2) bis L1; in Fig. 12 z.B. der Endlosfaser-Strang 5.1 von 11.1 (bei A1) über L1 bis A2.

Ein weiteres Anwendungsbeispiel eines erfindungsgemässen Strukturbauteils kann auch eine Heckklappe eines Fahrzeugs bilden mit mindestens einem integrierten Endlosfaser-Strang und einem Deformationselement z.B. an einem Scharnier als Lastaufnahmestelle.

Typische Randbedingungen und Anforderungen an Strukturbauteile, welche Crashtests mit bestimmten Crashlasten bestehen müssen, sind:
- Maximale Stosslasten, die zu ertragen sind, ohne zu brechen und so, dass eine Rest-Funktionsfähigkeit des Strukturbauteils erhalten bleibt,
- zulässige maximale totale Deformationswege von Strukturbauteil und Deformationselement und geometrischen Begrenzungen, die einzuhalten sind,
- bei geringem Gewicht und kostengünstiger Herstellung des Strukturbauteils.

Zur Auslegung eines Strukturbauteils mit einem zugehörigen Deformationselement für eine optimale Energieabsorption ohne Bruch kann mittels FE Berechnungen
- die Dimensionierung von Strukturbauteil (mit Endlosfaser-Strängen) und Deformationselement den Lasten und Kräften entsprechend ausgelegt,
- die zulässigen Deformationen (translatorisch und rotatorisch)
- und der Schwellenwert W ermittelt werden,
- so dass für Stosslasten bis zur maximalen Stossenergie die Anteile von plastischer Energieaufnahme von Strukturbauteil und von Deformationselement nach bestimmten gewünschten Kriterien optimal ausgelegt sind.

Im Rahmen dieser Beschreibung werden die folgenden Bezeichnungen verwendet:
- 1: Strukturbauteil
- 2: Tragstruktur
- 4: langfaserverstärkter Thermoplast
- 5: Endlosfaser-Stränge bzw. -Profile
- 6: Verbindungsbereich
- 7: Kreuzungsstelle von 5
- 8: Rippen
- 9: Sicken
- 10: Deformationselement
- 11: Krafteinleitungsstelle zu 1
- 11d: 11 deformiert
- 12: Verbindungsstelle mit 2
- 13: 10 wellenförmig
- 14: geschlitztes Blech
- 15, 16: Bereiche von F10(s10)
- 17: formschlüssige Ausformung von 5 und 10
- 18: 10 als Indikator
- 19: Führungsstange
- 20: Sitzstruktur
- 21: Sitzschale
- 22: Sitzlehne
- 23: Einzelsitzstruktur
- 24: 2/3 Rücksitzlehne
- 25: Sicherheitsgurt
- 26: mittlere Achshalterung
- 27: Sitzschloss
- 28: Gurtanbindung, Gurtschloss
- 29: Gepäcklast
- 30: Türstruktur, Fahrzeugtüre
- 31: Türscharnier
- 32: Türschloss
- a: Abstand zwischen 1 und 2
- A1, A2: Lastaufnahmestellen an der Tragstruktur 2
- L: Lasten, Stosslasten auf 1 wirkend
- Lmax: definierte maximale Stosslast L an 1
- F: Kräfte, definiert bzw. gemessen an der Stelle 11
- F1: Kraft von 1 alleine
- F10: Kraft von 10 alleine
- F11: Kraft von 1 + 10
- Fbr: Bruchkräfte
- F1br, F10br,:
- F11br: Bruchkräfte von 1, 10, 1 + 10
- F1max, F10max,:
- F11max: Kräfte an der Stelle 11 von 1, 10, 1 + 10 bei Belastung Lmax
- F(s): Kraft-Weg-Verlauf
- F1(s1): Kraft-Weg-Verlauf von 1
- F10(s10): Kraft-Weg-Verlauf von 10
- Feg1: Kraft an der Stelle 11, wenn die Belastung L der Elastizitätsgrenze EG1 von 1 entspricht
- Fd: maximale Betriebskraft an der Stelle 11
- EG: Elastizitätsgrenzwerte von 1 und 10: EG1, EG10
- EL: Stossenergie
- Ee: Energieaufnahme elastisch
- Ep: Energieaufnahme plastisch
- Ep10, Ep1: plastische Deformationsenergie von 10, 1
- W: Schwellenwert
- s1: Deformationsweg von 1 an der Stelle L
- s10: Deformationsweg von 10 an der Stelle 11
- s10max: maximaler Wert
- s10(x, y, z): mit räumlicher Translation (sx, sy, sz) und Rotation (rx, ry, rz)
- x, y, z: Raumrichtungen
- Cf: Frontcrash
- Ch: Heckcrash
- d: deformierte Lage

## Patentansprüche

1. Strukturbauteil (1) aus faserverstärktem thermoplastischem Kunststoff, mit mindestens einem Endlosfaser-Strang (5), **gekennzeichnet durch** ein metallisches Deformationselement (10),
welches einerseits an einer Krafteinleitungsstelle (11) mit dem Strukturbauteil (1) verbunden ist und welches andererseits an einer Verbindungsstelle (12) mit einer Tragstruktur (2) verbunden ist,
wobei das Deformationselement (10) eine plastische Deformation über einen Deformationsweg (s10) erfährt, wenn **durch** eine Stosslast L(t), welche auf das Strukturbauteil einwirkt, an der Krafteinleitungsstelle (11) eine Kraft F11(t) erzeugt wird, welche grösser ist als ein Schwellenwert (W),
wobei der Schwellenwert (W) so gewählt ist, dass eine definierte maximale Stosslast (Lmax) ohne Brechen des Strukturbauteils aufgefangen und dabei die Stossenergie (EL) teilweise **durch** plastische Deformationsenergie (Ep10) des Deformationselements (10) abgebaut wird,
und wobei ein Endlosfaser-Strang (5) bis an die Krafteinleitungsstelle (11) reicht.

2. Strukturbauteil nach Anspruch 1, **dadurch gekennzeichnet, dass** der Schwellenwert (W) kleiner ist als die Bruchkraft (F1br) des Strukturbauteils (1) ohne Deformationselement (10) an der Krafteinleitungsstelle (11) und die Bruchkraft (F10br) des Deformationselements (10) mindestens so gross ist wie die Bruchkraft (F1br) des Strukturbauteils ohne Deformationselement.

3. Strukturbauteil nach Anspruch 1, **dadurch gekennzeichnet, dass** der Schwellenwert (W) so gewählt ist, dass bei einer definierten maximalen Stosslast (Lmax) die maximal auftretende Kraft (F11max) höchstens 80% der maximal auftretenden Kraft (F1max) an der Krafteinleitungsstelle (11) ohne Deformationselement (10) beträgt.

4. Strukturbauteil nach Anspruch 1, **dadurch gekennzeichnet, dass** der Schwellenwert (W) so gewählt ist, dass bei einer einwirkenden definierten maximalen Stosslast (Lmax) die plastische Deformationsenergie (Ep10) des Deformationselements mindestens 10% der Stossenergie (EL) beträgt.

5. Strukturbauteil nach Anspruch 1, **dadurch gekennzeichnet, dass** der Schwellenwert (W) höchstens 70% der Bruchkraft (F1br) des Strukturbauteils (1) beträgt.

6. Strukturbauteil nach Anspruch 1, **dadurch gekennzeichnet, dass** der Schwellenwert (W) 100 - 150% der Kraft (Feg1) beträgt, welche einem Elastizitätsgrenzwert (EG1) des Strukturbauteils (1) entspricht.

7. Strukturbauteil nach Anspruch 1, **dadurch gekennzeichnet, dass** der Schwellenwert (W) grösser ist als eine definierte maximale Betriebskraft (Fd) an der Krafteinleitungsstelle (11).

8. Strukturbauteil nach Anspruch 1, **dadurch gekennzeichnet, dass** der Deformationsweg (s10) des Deformationselements begrenzt ist (s10max).

9. Strukturbauteil nach Anspruch 1, **dadurch gekennzeichnet, dass** das Deformationselement (10) eine translatorische und eine rotatorische plastische Deformation aufnehmen kann.

10. Strukturbauteil nach Anspruch 1, **dadurch gekennzeichnet, dass** die Deformation (s10) des Deformationselements (10) bezüglich Translation und Rotation räumlich (x, y, z) erfolgen kann.

11. Strukturbauteil nach Anspruch 1, **dadurch gekennzeichnet, dass** das Deformationselement einen Kraft-Weg-Verlauf F10(s10) aufweist, welcher in einem mittleren Bereich (F10.1) im wesentlichen konstant verläuft.

12. Strukturbauteil nach Anspruch 1, **dadurch gekennzeichnet, dass** das Deformationselement einen Kraft-Weg-Verlauf F10(s10) aufweist, welcher Bereiche mit höheren (15) und mit tieferen Werten (16) aufweist (F10.2, F10.3).

13. Strukturbauteil nach Anspruch 1, **dadurch gekennzeichnet, dass** ein Endlosfaser-Strang (5) und das Deformationselement (10) an der Krafteinleitungsstelle (11) eine formschlüssige Ausformung (17) aufweisen.

14. Strukturbauteil nach Anspruch 1, **dadurch gekennzeichnet, dass** das Deformationselement als Indikator (18) ausgebildet ist, wobei eine bleibende Deformation (s10) einfach feststellbar ist und / oder als separates auswechselbares Element ausgebildet ist.

15. Strukturbauteil nach Anspruch 1, **dadurch gekennzeichnet, dass** mehr als ein Deformationselement (10.1, 10.2) vorgesehen ist.

16. Strukturbauteil nach Anspruch 1, **dadurch gekennzeichnet, dass** ein Deformationselement zwischen zwei Strukturbauteilen (1.1, 1.2) vorgesehen ist.

17. Strukturbauteil nach Anspruch 1, **dadurch gekennzeichnet, dass** zwischen dem Strukturbauteil (1) und der Tragstruktur (2) ein freier Raum mit einem Abstand (a) für die Deformationsbewegungen des Deformationselements (10) vorgesehen ist.

18. Strukturbauteil nach Anspruch 1, **dadurch gekennzeichnet, dass** das Deformationselement (10) eine Bruchdehnung aufweist, welche mindestens der 2- bis 3-fachen Bruchdehnung des Strukturbauteils 1 entspricht.

19. Strukturbauteil nach Anspruch 1, **dadurch gekennzeichnet, dass** das Deformationselement (10) als gebogenes oder geschlitztes Blech (14) oder wellenförmig (13) ausgebildet ist.

20. Strukturbauteil nach Anspruch 1, **dadurch gekennzeichnet, dass** mindestens ein Endlosfaser-Strang (5) von einer Krafteinleitungsstelle (11) eines Defortnationselements (10) an einer ersten Lastaufnahmestelle (A1) bis an eine andere entfernte Lastaufnahmestelle (A2) und / oder bis zu einer Lasteinleitungsstelle (L) reicht.

21. Strukturbauteil nach Anspruch 1, **dadurch gekennzeichnet, dass** mindestens zwei Endlosfaser-Stränge (5.1, 5.2) vorgesehen und mit einem langfaserverstärkten Verbindungsbereich (6) kraftübertragend verbunden sind.

22. Strukturbauteil nach Anspruch 1, **gekennzeichnet durch** ein flach orientiertes Endlosfaser-Profil (5.1) und ein dazu vertikal orientiertes Endlosfaser-Profil (5.2), welche an einer räumlichen Kreuzungsstelle (7) miteinander verbunden sind.

23. Strukturbauteil nach Anspruch 1, **dadurch gekennzeichnet, dass** das Strukturbauteil als Sitzstruktur (20), Sitzschale (21), Sitzbank, Sitzlehne (22) oder als Einzelsitzstruktur (23) ausgebildet ist.

24. Strukturbauteil nach Anspruch 1, **dadurch gekennzeichnet, dass** das Strukturbauteil als 2/3-Rücksitzlehne (24) ausgebildet ist mit mindestens einem Deformationselement, welches an einer mittleren Achshalterung (26) und / oder an einem Sitzschloss (27) angeordnet ist.

25. Strukturbauteil nach Anspruch 1, **dadurch gekennzeichnet, dass** das Strukturbauteil als Türstruktur (30) ausgebildet ist, wobei ein Deformationselement (10.1) am einem Türschloss (32) oder an einem Scharnier (31) angeordnet ist (10.2).

26. Strukturbauteil nach Anspruch 1, **dadurch gekennzeichnet, dass** das Deformationselement (10) zur Aufnahme von mehr als einer Stosslast (L(t)) ausgelegt ist.

## Claims

1. Structural part (1) made of fibre-reinforced thermoplastics with at least one continuous fibre strand (5), **characterised by**
- a metallic deformation element (10)
- which on the one hand is connected to the structural part at a force application point (11) and on the other hand is connected to a support structure (2) at a connecting point (12),
- wherein the deformation element (10) experiences a plastic deformation over a deformation path (s10), when a force F11(t) larger than a threshold value (W) is generated at the force application point (11) by an impact load L(t) acting on the structural part
- and where the threshold value (W) is selected such that a defined maximum impact load (Lmax) is supported without breaking of the structural part and where the impact energy (EL) is partly converted into plastic deformation energy (Ep10) of the deformation element (10)
- and where a continuous fibre strand (5) extends up to the force application point (11).

2. Structural part according to claim 1, **characterised in that** the threshold value (W) is smaller than the breaking force (F1br) of the structural part (1) without deformation element (10) at the force application point (11), and the breaking force (F10br) of the deformation element (10) is at least as large as the breaking force (F1br) of the structural part without deformation element.

3. Structural part according to claim 1, **characterised in that** the threshold value (W) is selected such that, with a defined maximum impact load (Lmax), the maximum force arising (F11max) amounts to at most 80% of the maximum force arising (F1max) without deformation element (10) in the force application point (11).

4. Structural part according to claim 1, **characterised in that** the threshold value (W) is selected such that, with a defined maximum impact load (Lmax), the plastic deformation energy (Ep10) of the deformation element amounts to at least 10% of the impact energy (EL).

5. Structural part according to claim 1, **characterised in that** the threshold value (W) amounts to at most 70% of the breaking force (F1br) of the structural part (1).

6. Structural part according to claim 1, **characterised in that** the threshold value (W) amounts to 100 - 150% of the force (Feg1), which corresponds to an elasticity limit value (EG1) of the structural part (1).

7. Structural part according to claim 1, **characterised in that** the threshold value (W) is larger than a defined maximum operating force (Fd) at the force application point (11).

8. Structural part according to claim 1, **characterised in that** the deformation path (s10) of the deformation element is limited (s10max).

9. Structural part according to claim 1, **characterised in that** the deformation element (10) is capable of absorbing a translational and a rotational plastic deformation.

10. Structural part according to claim 1, **characterised by** a spatial (x, y, z) deformation (s10) of the deformation element (10) concerning translation and rotation.

11. Structural part according to claim 1, **characterised in that** the deformation element comprises a force-path course F10(s10), which in a central portion (F10.1) runs essentially constantly.

12. Structural part according to claim 1, **characterised in that** the deformation element comprises a force-path course F10(s10), which comprises ranges with higher (15) and with lower values (16) (F10.2, F10.3).

13. Structural part according to claim 1, **characterised in that** a continuous fibre strand (5) and the deformation element (10) comprise a positive formation (17) at the force application point (11).

14. Structural part according to claim 1, **characterised in that** the deformation element is formed as an indicator (18), wherein a permanent deformation (s10) is easily detectable and/or is formed as a separate replaceable element.

15. Structural part according to claim 1, **characterised by** more than one deformation element (10.1, 10.2).

16. Structural part according to claim 1, **characterised by** a deformation element between two structural parts (1.1, 1.2).

17. Structural part according to claim 1, **characterised in that**, between the structural part (1) and the support structure (2), a free space with a distance (a) for the deformation movements of the deformation element (10) is provided.

18. Structural part according to claim 1, **characterised in that** the deformation element (10) comprises a breaking elongation, which at least corresponds to the double or the triple breaking elongation of the structural part (1).

19. Structural part according to claim 1, **characterised in that** the deformation element (10) is formed as bent or slotted sheet (14) or is corrugated (13).

20. Structural part according to claim 1, **characterised in that** at least one continuous fibre strand (5) is extending from a force application point (11) of a deformation element (10) at a first load supporting place (A1) up to another remote load supporting place (A2) and/or up to a load application place (L).

21. Structural part according to claim 1, **characterised in that** at least two continuous fibre strands (5.1, 5.2) and a force-transmitting, long-fibre reinforced connecting portion (6) are provided.

22. Structural part according to claim 1, **characterised by** a flat oriented continuous fibre profile (5.1) and a vertical oriented continuous fibre profile (5.2), which are connected with one another at a spatial intersection (7).

23. Structural part according to claim 1, **characterised in that** the structural part is formed as a seat structure (20), seat shell (21), seat, seat back (22) or as a single seat structure (23).

24. Structural part according to claim 1, **characterised in that** the structural part is formed as a 2/3 rear seat back (24) with at least one deformation element, which is arranged at a central mounting plate (26) and/or at a seat lock (27).

25. Structural part according to claim 1, **characterised in that** the structural part is formed as a door structure (30), whereby a deformation element (10.1) is arranged at a door lock (32) or at a hinge (31) (10.2).

26. Structural part according to claim 1, **characterised in that** the deformation element (10) is adapted to support more than one impact load (L(t)).

## Revendications

1. Composant de structure (1) à base de plastique thermoplastique renforcé de fibre, comprenant au moins une corde à fibres continues (5), **caractérisé par**
un élément de déformation (10) métallique,
qui est relié d'une part en un point d'application de force (11) au composant de structure (1) et qui est relié d'autre part en un point de liaison (12) à une structure portante (2),
l'élément de déformation (10) subissant une déformation plastique par le biais d'une course de déformation (s10), lorsqu'une force F11(t), qui est supérieure à une valeur seuil (W), est générée au point d'application de force (11) par une charge de choc L(t) qui agit sur le composant de structure,
la valeur seuil(W) étant choisie de telle sorte qu'une charge de choc (Lmax) maximale définie soit interceptée sans rupture du composant de structure et que l'énergie de choc (EL) soit réduite partiellement par énergie de déformation plastique (Ep10) de l'élément de déformation (10),
et par une corde à fibres continues (5) allant jusqu'au point d'application de force (11).

2. Composant de structure selon la revendication 1, **caractérisé en ce que** la valeur seuil (W) est inférieure à la force de rupture (F1br) du composant de structure (1) sans élément de déformation (10) au point d'application de force (11) et la force de rupture (F10br) de l'élément de déformation (10) est au moins aussi grande que la force de rupture (F1br) du composant de structure sans élément de déformation.

3. Composant de structure selon la revendication 1, **caractérisé en ce que** la valeur seuil (W) est choisie de telle sorte que, dans le cas d'une charge de choc (Lmax) maximale définie, la force (F11max) maximale apparaissant s'élève au maximum à 80 % de la force maximale (F1max) apparaissant au point d'application (11) sans élément de déformation (10).

4. Composant de structure selon la revendication 1, **caractérisé en ce que** la valeur seuil (W) est choisie de telle sorte que, lors d'une charge de choc (Lmax) maximale définie agissant, l'énergie de déformation plastique (Ep10) de l'élément de déformation représente au moins 10 % de l'énergie de choc (EL).

5. Composant de structure selon la revendication 1, **caractérisé en ce que** la valeur seuil (W) représente au maximum 70 % de la force de rupture (F1br) du composant de structure (1).

6. Composant de structure selon la revendication 1, **caractérisé en ce que** la valeur seuil (W) représente 100 à 150 % de la force (Feg1) qui correspond à une valeur limite d'élasticité (EG1) du composant de structure (1).

7. Composant de structure selon la revendication 1, **caractérisé en ce que** la valeur seuil (W) est supérieure à une force de service (Fd) maximale définie au point d'application de force (11).

8. Composant de structure selon la revendication 1, **caractérisé en ce que** la course de déformation (s10) de l'élément de déformation est limitée (s10max).

9. Composant de structure selon la revendication 1, **caractérisé en ce que** l'élément de déformation (10) peut absorber une déformation plastique par translation et une déformation plastique par rotation.

10. Composant de structure selon la revendication 1, **caractérisé en ce que** la déformation (s10) de l'élément de déformation (10) par rapport à la translation et à la rotation s'effectue dans l'espace (x, y, z).

11. Composant de structure selon la revendication 1, **caractérisé en ce que** l'élément de déformation présente une courbe force-course F10(s10) qui est sensiblement constante dans une zone (F10.1) centrale.

12. Composant de structure selon la revendication 1, **caractérisé en ce que** l'élément de déformation présente une courbe force-course F10(s10) qui présente des zones avec des valeurs supérieures (15) et des valeurs inférieures (16) (F10.2, F10.3).

13. Composant de structure selon la revendication 1, **caractérisé en ce qu'**une corde à fibres continues (5) et l'élément de déformation (10) présentent une déformation (17) par complémentarité de formes au point d'application de force (11).

14. Composant de structure selon la revendication 1, **caractérisé en ce que** l'élément de déformation est conçu comme indicateur (18), une déformation résiduelle (s10) pouvant être constatée de façon simple et/ou étant conçue comme élément remplaçable séparé.

15. Composant de structure selon la revendication 1, **caractérisé en ce qu'**il est prévu plus d'un élément de déformation (10.1, 10.2).

16. Composant de structure selon la revendication 1, **caractérisé en ce qu'**il est prévu un élément de déformation entre deux composants de structure (1.1, 1.2).

17. Composant de structure selon la revendication 1, **caractérisé en ce qu'**entre le composant de structure (1) et la structure portante (2) est prévu un espace libre avec un espacement (a) pour les mouvements de déformation de l'élément de déformation (10).

18. Composant de structure selon la revendication 1, **caractérisé en ce que** l'élément de déformation (10) présente un allongement à la rupture qui correspond à au moins le double ou le triple de l'allongement à la rupture du composant de structure (1).

19. Composant de structure selon la revendication 1, **caractérisé en ce que** l'élément de déformation (10) est conçu sous forme de tôle (14) pliée ou fendue ou avec une forme ondulée (13).

20. Composant de structure selon la revendication 1, **caractérisé en ce qu'**au moins une corde à fibres continues (5) va d'un point d'application de force (11) d'un élément de déformation (10) en un premier point de suspension de charge (A1) jusqu'à un autre point de suspension de charge (A2) éloigné et/ou jusqu'à un point d'application de charge (L).

21. Composant de structure selon la revendication 1, **caractérisé en ce qu'**au moins deux cordes à fibres continues (5.1, 5.2) sont prévues et sont reliées par transmission de force à une zone de liaison (6) renforcée de fibre longue.

22. Composant de structure selon la revendication 1, **caractérisé par** un profil à fibres continues (5.1) orienté à plat et un profil à fibres continues (5.2) orienté verticalement par rapport au premier, lesquels profils sont reliés l'un à l'autre en un point de croisement (7) dans l'espace.

23. Composant de structure selon la revendication 1, **caractérisé en ce que** le composant de structure est conçu sous forme de structure de siège (20), de coque de siège (21), de banquette, de dossier de siège (22) ou de structure de siège individuel (23).

24. Composant de structure selon la revendication 1, **caractérisé en ce que** le composant de structure est conçu sous forme de dossier de siège 2/3 (24) avec au moins un élément de déformation, qui est disposé sur un support d'axe (26) central et/ou sur une attache de siège (27).

25. Composant de structure selon la revendication 1, **caractérisé en ce que** le composant de structure est conçu sous forme de structure de porte (30), un élément de déformation (10.1) étant disposé sur une serrure de porte (32) ou sur une charnière (10.2).

26. Composant de structure selon la revendication 1, **caractérisé en ce que** l'élément de déformation (10) est conçu pour l'absorption de plus d'une charge de choc (L(t)).
